# EUROPEAN PATENT APPLICATION

(11) **EP 2 387 223 A2**
(43) Date of publication of application: **16.11.2011**
(21) Application number: 11165617.9
(22) Date of filing: 11.05.2011
(51) Int. Cl.: H04N 1/32

(54) **Communication apparatus, control method of communication apparatus, and program**

(30) Priority: 13.05.2010 JP 2010111532
(71) Applicant: CANON KABUSHIKI KAISHA, Ohta-ku Tokyo 146-8501 (JP)
(72) Inventor: Ido, Tetsuo, Ohta-ku Tokyo (JP)
(74) Representative: Hitching, Peter Matthew

(57) **Abstract**

A communication apparatus performs a process for selecting from a plurality of services and displaying a predetermined service, detects whether there is connection with or disconnection from a communication peer, switching, if connection with the communication peer is detected after disconnecting from the communication peer, a service to be selected and displayed, and providing the selected and displayed service.

## Description

### BACKGROUND OF THE INVENTION

### Field of the Invention

The present invention relates to switching between services.

### Description of the Related Art

Recently, noncontact communication (short-range wireless communication) such as near field communication (NFC) and TransferJet (registered trademark) has come into use. In such noncontact communication, communication distance is extremely short. If a user places devices that are to communicate with each other within a few centimeters from each other (i.e., performs a touch operation), a wireless link is established. If the user then separates the devices (i.e., performs a detach operation), the wireless link becomes disconnected. (refer to http://www.transferjet.org/tj/transferjet whitepaper.pdf). Such noncontact communication allows the user to easily transmit image data from a camera to a printer by performing the touch operation.

Further, there is a multifunction printer capable of printing and storing in a memory card, data acquired from an external device. It is necessary for the user of such a multifunction printer to previously set whether to print or store the data, by operating the printer (for example, refer to Japanese Patent Application Laid-Open No. 2005-354499).

If the user is to use noncontact communication to transmit the image data from the camera to the printer and store the image data in the memory card of the printer, it becomes necessary for the user to operate the printer and specify settings for storing the data. It then becomes necessary for the user to place the camera near the printer (i.e., perform the touch operation). Since the user is required to perform the touch operation and also operate on the printer, the operations are burdensome for the user.

### SUMMARY OF THE INVENTION

The present invention is directed to switching displaying of services to be provided, every time the user places the communication apparatus and a communication peer apparatus separated from and close to each other. The user can thus select the services to be provided.

According to an aspect of the present invention, a communication apparatus performs a process for selecting and displaying a predetermined service from a plurality of services, detects whether there is connection with or disconnection from a communication peer, switching, if a connection with the communication peer is detected after disconnecting from the communication peer, a service to be selected and displayed, and providing the selected displayed service.

According to the present invention, the communication apparatus and the communication peer cooperating with each other can switch the service to be provided to the user, when the user places the communication apparatus and the communication peer close to and away from each other. According to an aspect of the present invention, there is provided a communication apparatus as specified in claims 1 to 9. According to another aspect of the present invention, there is provided a method as specified in claim 10. According to a third aspect of the present invention, there is provided a program as specified in claims 11 and 12. Such a program can be provided by itself or carried by a carrier medium. The carrier medium may be a recording or other storage medium such as the storage medium of claim 13. The carrier medium may also be a transmission medium. The transmission medium may be a signal.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 illustrates a system configuration of a wireless communication system.

Fig. 2 illustrates a hardware configuration of a digital camera.

Fig. 3 illustrates a hardware configuration of a printer.

Fig. 4 is a sequence chart illustrating a process performed between the digital camera and the printer.

Fig. 5 is a flowchart illustrating a process performed by the digital camera.

Fig. 6 is a flowchart illustrating a process performed by the printer.

Figs. 7A, 7B, and 7C illustrate screens displayed when the user selects a service.

Fig. 8 is a block diagram illustrating software functions of the digital camera.

Fig. 9 is a flowchart illustrating a process performed by the digital camera.

Fig. 10 is a flowchart illustrating a process performed by the printer.

Fig. 11 illustrates a system configuration according to a third exemplary embodiment of the present invention.

Figs. 12A and 12B are block diagrams illustrating functions of a communication apparatus.

Fig. 13 is a flowchart illustrating a process according to the third exemplary embodiment of the present invention.

Fig. 14 is a schematic diagram illustrating service information according to the third exemplary embodiment of the present invention.

Fig. 15 is a configuration example of a service information storing table according to the third exemplary embodiment of the present invention.

Fig. 16 illustrates a system configuration according to fourth and fifth exemplary embodiments of the present invention.

Fig. 17 is a flowchart illustrating a process performed according to the fourth exemplary embodiment of the present invention.

Fig. 18 is a schematic diagram illustrating service information according to the fourth exemplary embodiment of the present invention.

Fig. 19 is a configuration example of a service information storing table according to the third exemplary embodiment of the present invention.

Figs. 20A and 20B are example of selection menus displayed according to the fourth exemplary embodiment of the present invention.

Fig. 21 is a flowchart illustrating a process performed according to the fifth exemplary embodiment of the present invention.

### DESCRIPTION OF THE EMBODIMENTS

Various exemplary embodiments, features, and aspects of the invention will be described in detail below with reference to the drawings.

According to a first exemplary embodiment, the service provided by cooperation between the camera and the printer is switched by the user performing the touch operation, i.e., placing the camera and the printer close to each other, and the detach operation, i.e., placing the camera and the printer away from each other.

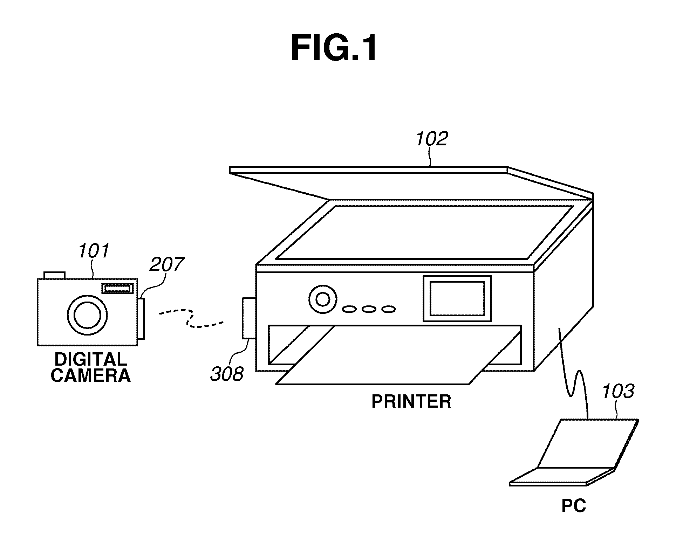

Fig. 1 illustrates a system configuration of a wireless communication system according to the present exemplary embodiment. Referring to Fig. 1, the wireless communication system according to the present exemplary embodiment includes a digital camera 101, i.e., a communication apparatus including a wireless communication function. The wireless communication system also includes a multifunction printer (hereinafter referred to as a printer) 102, i.e., a communication peer apparatus including the wireless communication function. A personal computer (PC) 103 is an external device connected to the printer 102 via a wired line.

According to the present exemplary embodiment, TransferJet (registered trademark) will be used as the wireless communication. However, this is not a limitation, and communication complying with NFC or Infrared Data Association (IrDA) may also be used. A communication range of the wireless communication is several millimeters to several centimeters. The wireless link can thus be established between the digital camera 101 and the printer 102 by the user placing an antenna of the digital camera 101 within several millimeters to several centimeters from the antenna of the printer 102. The wireless link is a connection between wireless units in the digital camera 101 and the printer 102. Further, the wireless link between the digital camera 101 and the printer 102 becomes disconnected by the user separating the antenna of the digital camera 101 from the antenna of the printer 102 by more than several centimeters.

As described above, the user can establish or disconnect the wireless link between the digital camera 101 and the printer 102 by only manually moving either or both of the digital camera 101 and the printer 102 close to or away from each other.

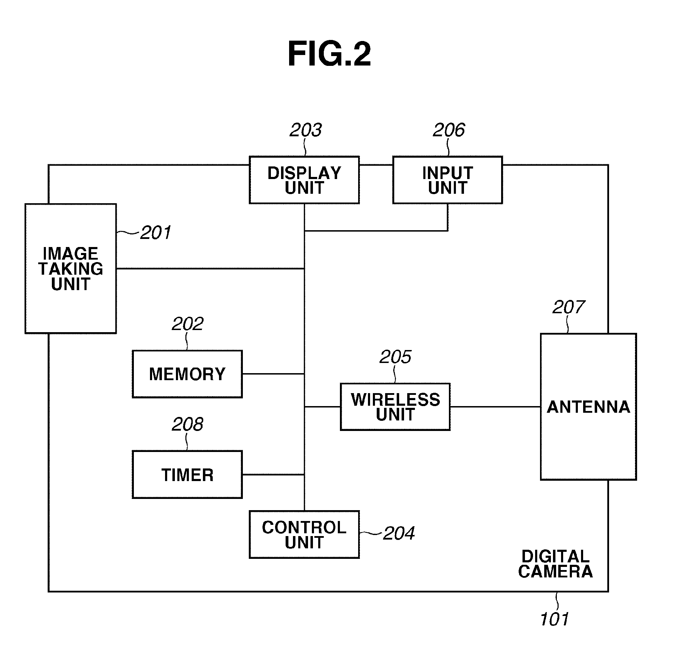

Fig. 2 illustrates a hardware configuration of the digital camera 101. Referring to Fig. 2, an image taking unit 201 generates image data from an optical image of an object. A memory 202 stores the image data, and stores applications and programs to be described below. A display unit 203 displays the image data to the user. A control unit 204 controls processes performed by the digital camera 101. A wireless unit 205 realizes a wireless communication function and includes an antenna 207. An input unit 206 is an interface for the user to input instructions. The digital camera 101 can transmit to the printer 102 via the wireless unit 205 the image data designated by the user or the application, or all of the image data stored in the memory 202. The digital camera can also transmit to the printer 102 data of different formats other than the image data, such as document data. A timer 208 measures the time.

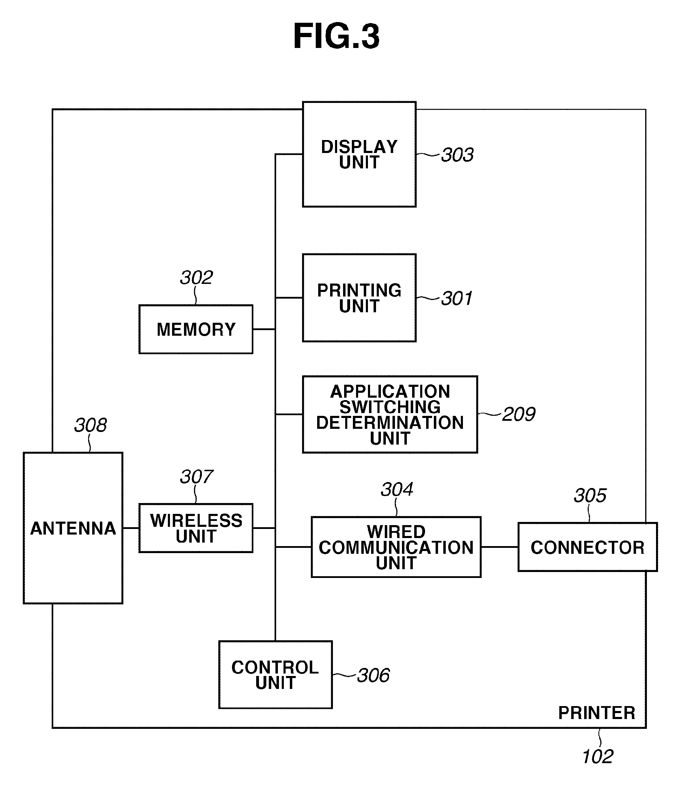

Fig. 3 illustrates the hardware configuration of the printer 102. Referring to Fig. 3, a printing unit 301 performs printing. A memory 302 stores the image data, the document data, and the applications and programs to be described below. A display unit 303 displays the image data and an operation screen to the user. A wired communication unit 304 performs wired communication with the PC 103 and includes a connector 305 for performing wired communication. The printer 102 can transmit and receive the image data to and from the PC 103 via the wired communication unit 304. A control unit 306 controls the processes performed by the printer 102. A wireless unit 307 realizes the wireless communication function and includes an antenna 308. The printer 102 can receive the image data from the digital camera 101 via the wireless unit 307.

The printer 102 also includes a print application for the printing unit 301 to print the image data received from the digital camera 101. Further, the printer 102 includes a display application for the display unit 202 to display the image data received from the digital camera 101. Furthermore, the printer 102 includes a storage application for storing in the memory 302 the image data received from the digital camera 101. Moreover, the printer 102 includes a transfer application for transferring the image data received from the digital camera 101 to the PC 103 via the wired communication unit 304. The printer 102 can provide various services by executing such applications. The applications are stored in the memory 302 of the printer 102. Further, the control unit 306 executes each of the applications one by one and does not execute a plurality of applications at the same time.

A case where the image data of an image taken by the user using the digital camera 101 is displayed in the printer 102 will be described below.

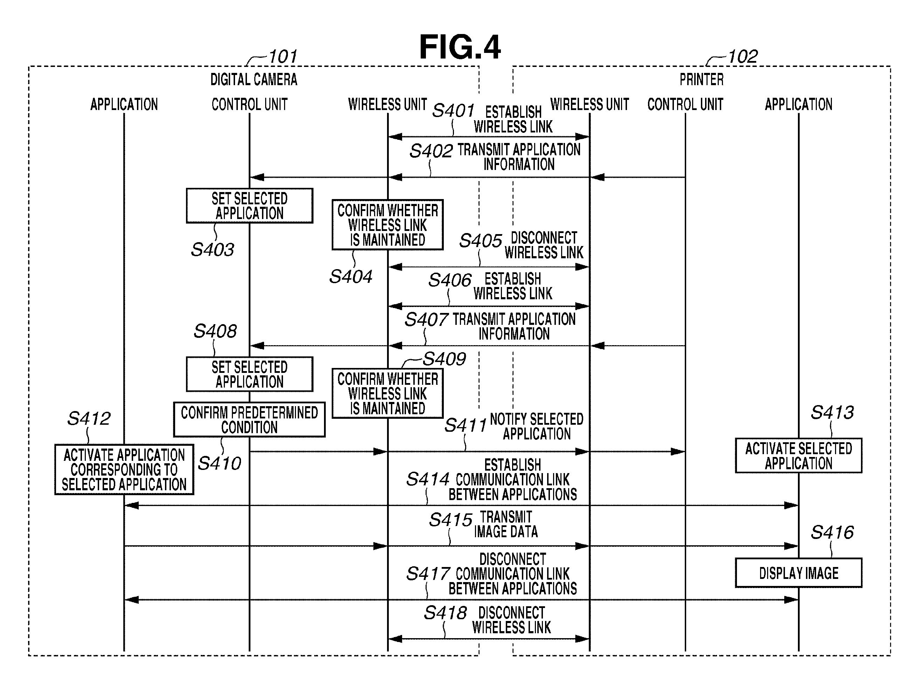

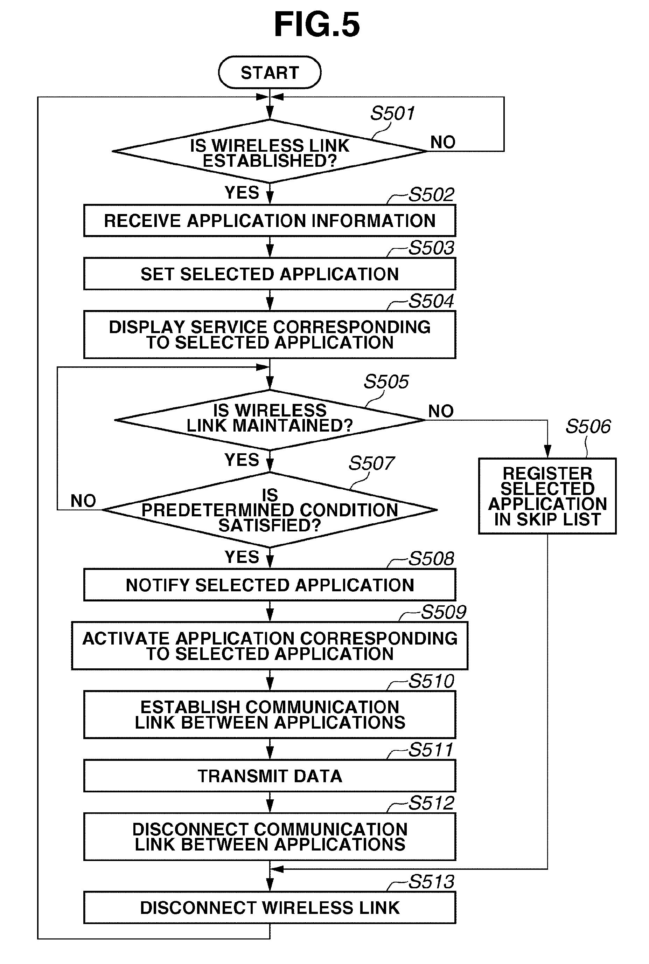

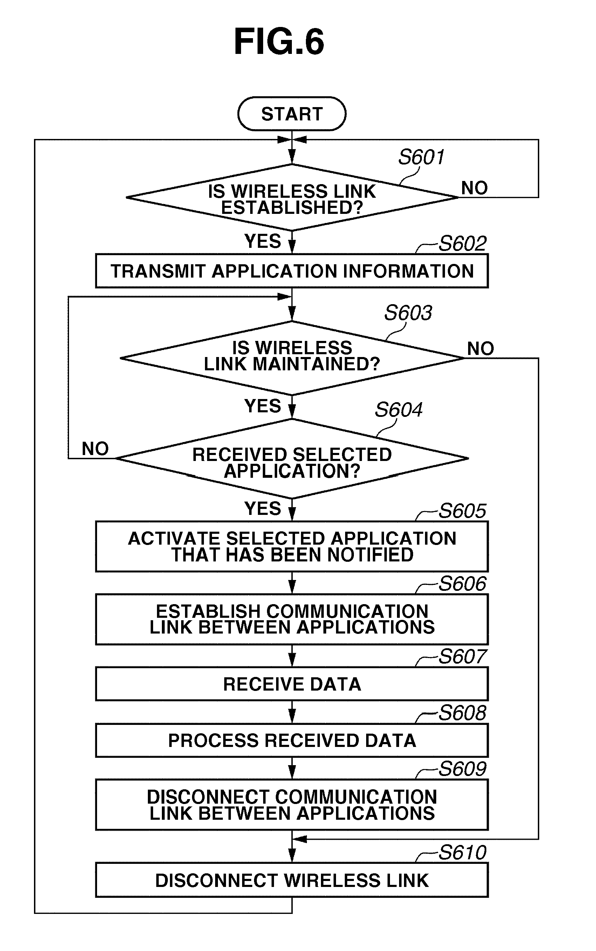

Fig. 4 is a sequence chart illustrating a process for transferring to the printer 102 by wireless communication, the image data of an image taken by the user using the digital camera 101, and displaying the image on the display unit 203 in the printer 102. Further, Fig. 5 is a flowchart realized by the control unit 204 in the digital camera 101 reading a program from the memory 202, when transferring the image data of an image taken by the user using the digital camera 101 to the printer 102 by wireless communication. Furthermore, Fig. 6 is a flowchart realized by the control unit 306 in the printer 102 reading the program in the memory 302, when the printer 102 receives the image data from the digital camera 101. The memory 202 in the digital camera 101 previously stores the image data of the images taken by the user.

In step S401 illustrated in Fig. 4, step S501 in Fig. 5, and step S601 in Fig. 6, the user manually holds the digital camera 101 and brings the antenna 207 of the digital camera 101 close to the antenna 308 of the printer 102 (hereinafter referred to as "performs touch operation"). When the user performs the touch operation, a wireless link (i.e., a wireless connection) is established between the wireless unit 205 in the digital camera 101 and the wireless unit 307 in the printer 102. The control unit 204 thus detects that the wireless link has been established.

In step S402 in Fig. 4 and step S602 in Fig. 6, when the wireless link is established, the control unit 306 in the printer 102 transmits to the digital camera 101 as application information, application identifiers indicating each of the plurality of applications included in the printer 102. The printer 102 includes the print application, the display application, the storing application, and the transfer application, and transmits to the digital camera 101 the application identifiers indicating such applications.

The printer 102 generates the application information to be transmitted previous to the wireless link being established, and stores the information in the memory 302. However, the printer 102 may generate the application information after the wireless link is established. Further, the printer 102 may acquire the application information in the digital camera 101 before transmitting the application information to the digital camera 101. The printer 102 may thus transmit to the digital camera 101 the application information including only the application identifiers corresponding to the applications in the digital camera 101. For example, if the digital camera 101 does not support the transfer application, the printer 102 transfers to the digital camera 101 the application information excluding the application identifier indicating the transfer application. Furthermore, after the wireless link is established, the printer 102 may generate the application information by confirming a device identifier (i.e., a device ID) of the digital camera 101 and omitting the application identifiers that the digital camera 101 has previously been notified of. As a result, the printer 102 does not transmit the same application information to the communication peer apparatus that the printer 102 has once connected to, so that a communication load is reduced.

In step S402 in Fig. 4 and step S502 in Fig. 5, the wireless unit 205 in the digital camera 101 receives the application information from the printer 102. In step S403 and step S503, the control unit 204 in the digital camera 101 sets as a selected application, one of the application identifiers included in the received application information. More specifically, the control unit 204 excludes from the application information the application identifiers corresponding to the applications not included in the digital camera 101. For example, if the digital camera 101 does not support the transfer application, the application identifier indicating the transfer application is excluded from the application information. The application identifier which is not registered in a skip list, and which is positioned first in an order of the application identifiers included in the application information, is then set as the selected application. The skip list is a list in which the application identifiers that have once been presented to and rejected by the user, are temporarily registered. No application identifier is currently registered in the skip list.

According to the present exemplary embodiment, the digital camera 101 supports the print application, the display application, the storage application, and the transfer application. Further, the application identifiers are arranged in the application information in the order of the print application, the display application, the storage application, and the transfer application. Since there is no application identifier registered in the skip list, the print application is set as the selected application. If all of the application identifiers included in the application information is registered in the skip list, the registration in the skip list is cleared. As a result, the selected application that the user has erroneously rejected can be reset as the selected application. Further, the application identifier which is frequently selected in the digital camera 101, among the application identifiers included in the application information and not registered in the skip list, may be set as the selected application.

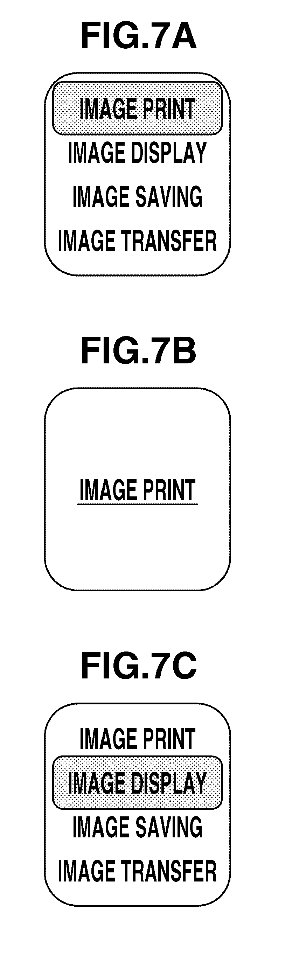

In step S504 in Fig. 5, the display unit 203 in the digital camera 101 displays the services corresponding to the plurality of application identifiers included in the received application information. The display unit 203 displays in a selected state, the service corresponding to the application identifier that has been set as the selected application as illustrated in Fig. 7A. The display unit 203 may also display only the service corresponding to the application identifier that has been set as the selected application, as illustrated in Fig. 7B.

In step S404 in Fig. 4 and step S505 in Fig. 5, the wireless unit 205 in the digital camera 101 confirms, while the display unit 203 is displaying the services, whether the wireless link between the printer 102 is maintained. If the wireless link is maintained (YES in step S505), the process proceeds to step S507 in Fig. 5. On the other hand, if the wireless link is not maintained (i.e., if it is detected that the link is disconnected, NO in step 5505) , the process proceeds to step S506 in Fig. 5. Further, in step S603 illustrated in Fig. 6, the wireless unit 307 in the printer 102 confirms whether the wireless link with the digital camera 101 is maintained. If the wireless link is maintained (YES in step S603), the process proceeds to step S604. If the wireless link is not maintained (NO in step S603), the process proceeds to step S610.

According to the present exemplary embodiment, since the user desires to display the image in the printer 102 instead of printing the image, the user places the antenna 207 of the digital camera 101 away from the antenna 308 of the printer 102 (i.e., performs the detach operation) to indicate rejection of the print service. If the user performs the detach operation, the digital camera 101 and the printer 102 are placed out of the communication range, so that the wireless link between the wireless unit 205 in the digital camera 101 and the wireless unit 307 in the printer 102 cannot be maintained.

The process performed by the digital camera 101 thus proceeds to step S506 in Fig. 5, and the control unit 204 registers the selected application in the skip list. According to the present exemplary embodiment, the print application is registered in the skip list. In step S405 in Fig. 4 and step S513 in Fig. 5, the wireless unit 205 in the digital camera 101 then disconnects the wireless link. On the other hand, the process performed by the printer 102 proceeds to step S610 in Fig. 6, and the wireless unit 307 disconnects the wireless link.

In step S406 in Fig. 4, step S501 in Fig. 5, and step S601 in Fig. 6, the user then performs the touch operation within a first period of time. If the user does not perform the touch operation within the first period of time, the digital camera 101 clears the registered contents in the skip list. When the user performs the touch operation, the wireless link between the wireless unit 205 in the digital camera 101 and the wireless unit 307 in the printer 102 is established. In step S407 in Fig. 4 and step S602 in Fig. 6, after the wireless link is established, the control unit 306 in the printer 102 transmits the application information to the digital camera 101 via the wireless unit 307. As described above, since the printer 102 transmits the application information every time the wireless link is established, it is not necessary for the printer 102 to remember the communication peer apparatus that the printer 102 has previously connected to.

In step S407 in Fig. 4 and step S502 in Fig. 5, the wireless unit 205 in the digital camera 101 receives the application information. In step S408 and step S503, the control unit 204 then resets the selected application. The application identifiers in the application information are arranged in the order of the print application, the display application, the storage application, and the transfer application, and the print application is registered in the skip list. The display application is thus reset as the selected application.

In step S504 in Fig. 5, the display unit 203 in the digital camera 101 displays as illustrated in Fig. 7C, the services corresponding to the plurality of applications included in the received application information. Referring to Fig. 7C, "image display" which is the service corresponding to the display application is displayed in the selected state.

In step S409 in Fig. 4 and step S505 in Fig. 5, the wireless unit 205 in the digital camera 101 confirms, while the display unit 203 continues to display the services, whether the wireless link with the printer 102 is maintained. Further, in step S603 in Fig. 6, the wireless unit 307 in the printer 102 confirms whether the wireless link with the digital camera 101 is maintained.

According to the present exemplary embodiment, "image display" desired by the user is selected. The user thus continues to place the antenna 207 of the digital camera 101 and the antenna 308 of the printer 102 close to each other to indicate that the user has decided on the display service. As a result, the wireless link between the wireless unit 205 in the digital camera 101 and the wireless unit 307 in the printer 102 is maintained.

Since the wireless link is maintained (YES in step S505) , the process performed by the digital camera 101 proceeds to step S507 in Fig. 5. In step S507, the control unit 204 determines whether a predetermined condition is satisfied. According to the present exemplary embodiment, the control unit 204 determines whether a second period of time has elapsed after the display unit 203 displayed the selected application which is reset, as being in the selected state. However, the control unit 204 may also determine whether the user has pressed an enter button in the input unit 206, as a predetermined condition. Further, the control unit 204 may determine whether either the second period of time has elapsed, or the user has pressed the enter button, as the predetermined condition. If the predetermined condition is satisfied (i.e., if the wireless link has been maintained for the second period of time or longer) (YES in step S507), the process proceeds to step S508. If the predetermined condition is not satisfied (NO in step 507), the process returns to step S505.

In step S411 in Fig. 4 and step S508 in Fig. 5, the control unit 204 in the digital camera 101 notifies the printer 102 via the wireless unit 205 of the selected application (i.e., the display application) . In step S604 in Fig. 6, the control unit 306 in the printer 102 receives the selected application via the wireless unit 307.

In step S412 in Fig. 4 and step S509 in Fig. 5, the control unit 204 in the digital camera 101 then activates the application corresponding to the selected application. According to the present exemplary embodiment, the control unit 204 activates the application that is capable of transmitting the image data stored in the memory 202 to the display application in the printer 102. On the other hand, in step S413 in Fig. 4 and step S605 in Fig. 6, the control unit 306 in the printer 102 activates the notified selected application (i.e., the display application). The printer 102 may previously activate a predetermined application (e.g., the print application of highest usage frequency in the printer 102) . In such a case, the predetermined application is ended only in the case where the notified selected application is different from the predetermined application, and the printer 102 may then activate the notified selected application.

In step S414 in Fig. 4, step S510 in Fig. 5, and step S606 in Fig. 6, the wireless link is established between the applications that have been activated as described above. The application activated in the digital camera 101 then transmits the data to the application activated in the printer 102. In step S415 and step S511, the application in the digital camera 101 corresponding to the display application transmits the image data stored in the memory 202 to the display application in the printer 102. In step S415 and step S607, the application activated in the printer 102 receives the data. In step S416 and step S608, the application activated in the printer 102 then processes the received data. According to the present exemplary embodiment, the display application displays on the display unit 303 in the printer 102, the image based on the received image data. The processing of the received data may also be performed after the wireless link between the applications has been disconnected.

In step S417 in Fig. 4, step S512 in Fig. 5, and step S609 in Fig. 6, the applications in the digital camera 101 and the printer 102 disconnect the wireless link between the applications after the data has been transmitted and received between the applications. Further, when the printer 102 receives the data, either or both of the digital camera 101 and the printer 102 notifies the user thereof by sounding an alert or displaying a message on the display unit.

In step S418 in Fig. 4, step S513 in Fig. 5, and step S610 in Fig. 6, the user who has been notified of the data reception, performs the detach operation. The wireless unit 205 in the digital camera 101 and the wireless unit 307 in the printer 102 then disconnect the wireless link.

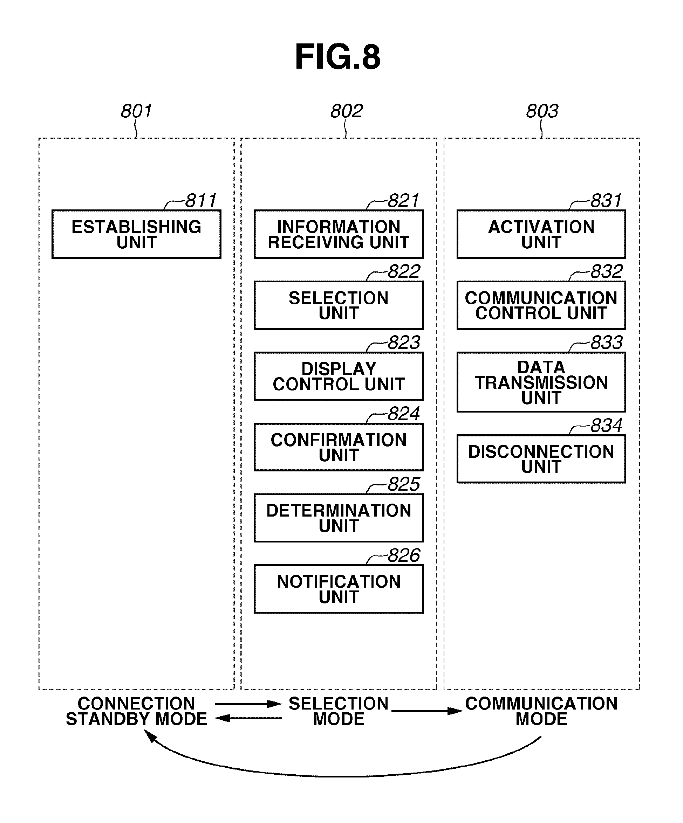

The above-described flowchart realized by the digital camera 101 may be illustrated as a block diagram of the software functions in Fig. 8. Referring to Fig. 8, a functional block group 801 operates while the digital camera 101 stands by for the wireless link to be connected (i.e. is in a connection standby mode). The functional block group 801 includes an establishing unit 811. The establishing unit 811 controls the wireless unit 205 to establish the wireless link with the printer 102 (i.e., corresponding to step S501 illustrated in Fig. 5).

A function block group 802 operates during a selection mode in which the application is selected, and includes components 821, 822, 823, 824, 825, and 826 to be described below. An information receiving unit 821 receives the application information from the printer 102 (i.e., corresponding to step S502) . A selection unit 822 selects one application from the application identifiers included in the application information (i.e., corresponding to step S503) . Further, the selection unit 822 registers in and deletes from the skip list, the application identifiers (i.e., corresponding to step S506) . A display control unit 823 causes the display unit 203 to display the application information (i.e., corresponding to step S504). A confirmation unit 824 controls the wireless unit 205 and confirms the wireless link with the printer 102 (i.e., corresponding to step S505) . A determination unit 825 determines, when the wireless link is maintained, whether the predetermined condition is satisfied (i.e., corresponding to step S507) . A notification unit 826 notifies the printer 102 of the selected application (i.e., corresponding to step S508).

A function block group 803 operates when communication is performed in the application level (i.e., in a communication mode) and includes components 831, 832, 833, and 834 to be described below.

An activation unit activates the application (i.e., corresponding to step S509) . A communication control unit 832 controls the communication link between the applications (i.e., corresponding to step S510 and step S512) . A data transmission unit 833 transmits the data (i.e., corresponding to step S511) . A disconnection unit 834 disconnects the wireless link (corresponding to step S513) .

As described above, the service to be performed can be switched by the user performing the touch operation and the detach operation between the digital camera 101 and the printer 102. As a result, the desired service can be performed without the user operating on the buttons on the apparatuses.

According to the above-described exemplary embodiment, when the wireless link is established (reconnected) , the selected application is reset. However, the selected application may be reset when the wireless link is disconnected. In such a case, when it is detected that the communication peer with which the wireless link is established in step S401 is different from the communication peer with which the wireless link is established in step S406, the selected application is reset after connection.

According to the first exemplary embodiment, the printer transmits to the digital camera, the information about the plurality of applications included in the printer. According to a second exemplary embodiment, the printer previously activates one application and transmits only the information about the activated application to the digital camera.

The hardware configurations of the digital camera and the printer are the same as those according to the first exemplary embodiment, and description will thus be omitted. A case in which the image taken by the user using the digital camera 101 is displayed on the printer 102 will be described below.

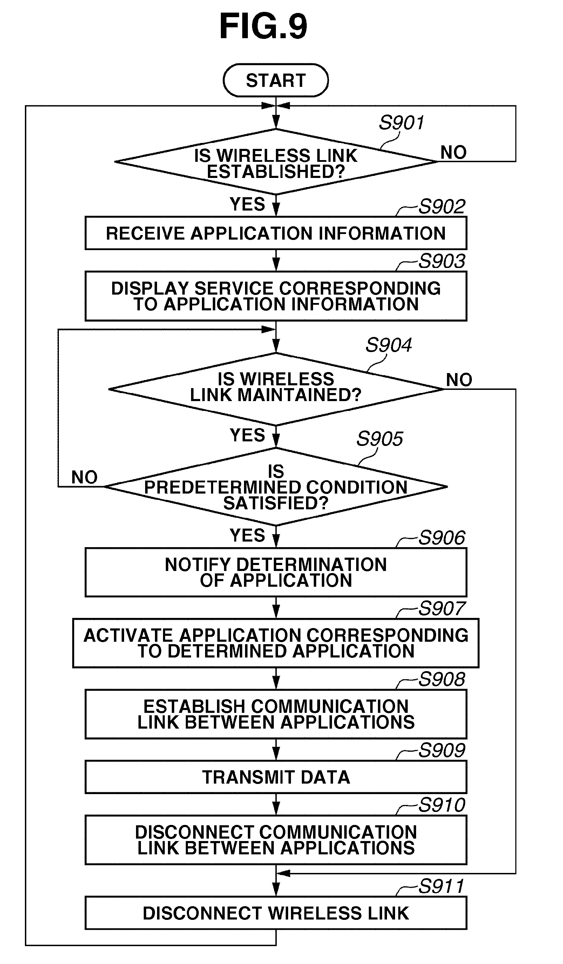

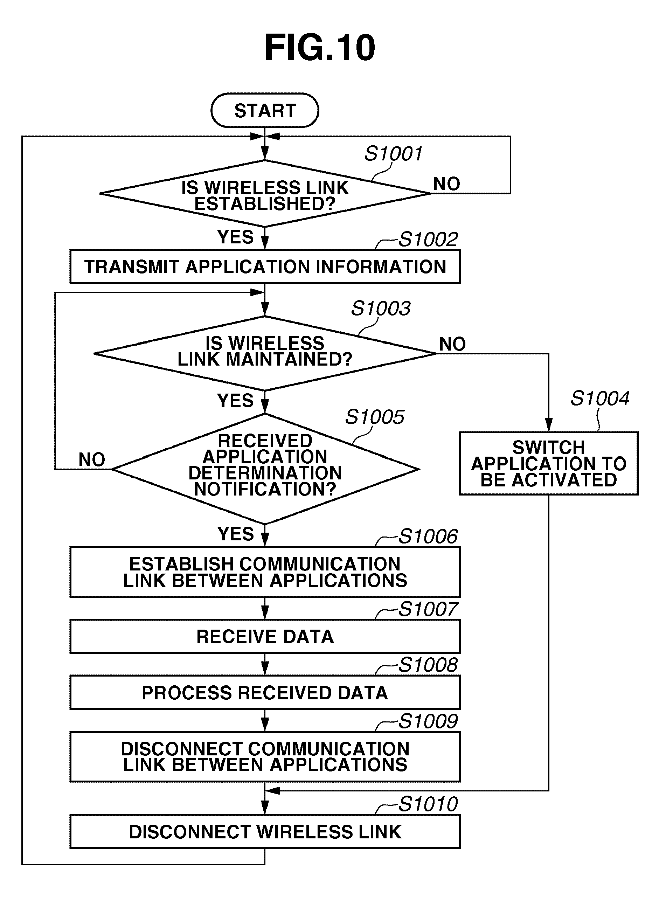

Fig. 9 is a flowchart illustrating a process realized by the control unit 204 in the digital camera 101 for reading from the memory 202 and executing a program when the image data of the image taken using the digital camera 101 is transmitted to the printer 102 by wireless communication. Fig. 10 is a flowchart realized by the control unit 306 in the printer 102 for reading from the memory 302 and executing a program when the printer 102 receives the image data from the digital camera 101. The control unit 306 in the printer 102 previously activates the print application.

In step S901 illustrated in Fig. 9 and in step S1001 illustrated in Fig. 10, when the user performs the touch operation, a wireless link is established between the wireless unit 205 in the digital camera 101 and the wireless unit 307 in the printer 102. In step S1002 in Fig. 10, after the wireless link is established, the control unit 306 in the printer 102 transmits to the digital camera 101 via the wireless unit 307 the information indicating the application activated by the printer 102 (i.e., the print application), as the application information. In step S902 in Fig. 9, the wireless unit 205 in the digital camera 101 receives the application information from the printer 102. In step S903, the display unit 203 in the digital camera 101 then displays the service indicated by the received application information. According to the present exemplary embodiment, the display unit 203 displays "image print". The display unit 303 in the printer 102 also displays the service that is realized by the application being executed in the printer 102.

In step S904 in Fig. 9, the wireless unit 205 in the digital camera 101 confirms, while the display unit 203 displays the service, whether the wireless link between the printer 102 is maintained. If the wireless link is maintained (YES in step S904), the process proceeds to step S905. On the other hand, if the wireless link is not maintained (NO in step S904) , the process proceeds to step S911. Further, in step S1003 in Fig. 10, the wireless unit 307 in the printer 102 confirms whether the wireless link with the digital camera 101 is maintained. If the wireless link is maintained (YES in step S1003), the process proceeds to step S1005. If the wireless link is not maintained (NO in step S1003), the process proceeds to step S1004.

According to the present exemplary embodiment, the user desires the image to be displayed instead of printed, so that the user performs the detach operation to reject the print service. If the user performs the detach operation, the digital camera 101 and the printer 102 are placed out of communication range, so that the wireless link between the wireless unit 205 in the digital camera 101 and the wireless unit 307 in the printer 102 cannot be maintained.

As a result, the process performed by the digital camera proceeds to step S911, and the wireless unit 205 in the digital camera 101 disconnects the wireless link. On the other hand, the process performed by the printer 102 proceeds to step S1004, and the printer 102 switches the application to be activated. According to the present exemplary embodiment, the application to be activated is switched from the print application to the display application based on the predetermined order (i.e., in the order of the print application, the display application, the storing application, and the transfer application). However, the present invention is not limited to the above, and the order of the applications may be changed to an order of usage frequency, so that the application is switched in the order from higher usage frequency. The application to be executed is thus switched in the order of the application frequently used by the user, and user-friendliness is improved. In step S1010, the wireless unit 307 in the printer 102 disconnects the wireless link.

The user then performs the touch operation again. In step S901 in Fig. 9 and step S1001 in Fig. 10, when the user performs the touch operation, the wireless link is established between the wireless unit 205 in the digital camera 101 and the wireless unit 307 in the printer 102. In step S1002, after the wireless link is established, the control unit 306 in the printer 102 transmits to the digital camera 101 via the wireless unit 307, the information indicating the application being executed by the printer 102 (i.e., the display application) as the application information.

In step S902 in Fig. 9, the wireless unit 205 in the digital camera 101 receives the application information from the printer 102. In step S903, the display unit 203 in the digital camera 101 then displays the service indicated by the received application information. According to the present exemplary embodiment, the display unit 203 displays "image display". The display unit 303 in the printer 102 also displays the service that is realized by the application being executed by the printer 102.

Since the service, i.e., "image display", which is desired by the user is selected, the user continues to place the antenna 207 of the digital camera 207 and the antenna 308 of the printer 102 close to each other to indicate that the user has decided on the display service. The wireless link between the wireless unit 205 in the digital camera 101and the wireless unit 307 in the printer 102 is thus maintained.

The process illustrated in Fig. 9 then proceeds to step S905, and the control unit 204 in the digital camera 101 determines whether a predetermined condition is satisfied. According to the present exemplary embodiment, the control unit 204 determines whether the second period of time has elapsed after the display unit 203 displayed the selected application which is reset, as in the selected state. If the predetermined condition is satisfied (YES in step S905), the process proceeds to step S906. In step S906, the control unit 204 transmits to the printer 102 via the wireless unit 205, an application determination notification indicating that the application has been determined. In step S907, the control unit 204 executes the application corresponding to the determined application (i.e., the display application). On the other hand, in step S1005 illustrated in Fig. 10, the wireless unit 307 in the printer 102 receives the application determination notification.

In step S908 in Fig. 9 and step S1006 in Fig. 10, the communication link is then established between the application activated in the digital camera 101 and the application activated in the printer 102. In step S909, the application activated in the digital camera 101 then transmits the data. In step S1007, the application activated in the printer 102 receives the data. In step S1008, the application activated in the printer 102 processes the received data. According to the present exemplary embodiment, the display application receives the image data and displays the received image data on the display unit 303 in the printer 102. Further, when the printer 102 receives the data, either or both of the digital camera 101 and the printer 102 notifies the user thereof by sounding an alert or displaying a message on the display unit.

In step S910 and step S1009, upon transmitting and receiving the data between the applications, the applications in the digital camera 101 and the printer 102 disconnect the communication link between the applications. In step S911 and step S1010, the user who is notified of the data reception performs the detach operation, and the wireless unit 205 in the digital camera 101 and the wireless unit 307 in the printer 102 disconnect the wireless link.

As described above, the service to be performed can be switched by the user performing the touch operation and the detach operation between the digital camera 101 and the printer 102. As a result, the service desired by the user can be performed without the user operating on the buttons on the apparatuses.

A similar effect as described above may be achieved using the digital camera 101 according to the first exemplary embodiment and the printer 102 according to the second exemplary embodiment. More specifically, the digital camera 101 acquires and sets as the selected application, the application information including a first application identifier. The user then performs the detach operation and the touch operation, and the digital camera 101 acquires the application information including a second application identifier that is different from the first application identifier. The digital camera 101 then resets the acquired application information as the selected application and then transmits the reset selected application to the printer 102.

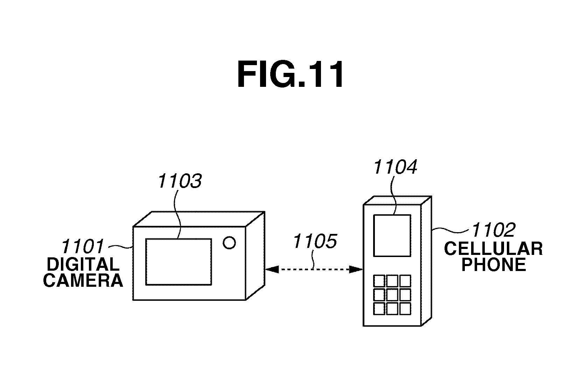

Fig. 11 illustrates a system configuration according to a third exemplary embodiment. Referring to Fig. 11, a cellular phone 1102 is a communication peer apparatus of a digital camera 1101. The digital camera 1101 includes a display unit 1103, and the cellular phone 1102 includes a display unit 1104. An operator of the digital camera 1101 and the cellular phone 1102 can change or set by viewing the display unit 1103, a display state, such as "browse image file" or "select image file". Each of the digital camera 1101 and the cellular phone 1102 includes a computer (i.e., a CPU) for controlling the apparatuses and a memory for storing the program to be executed by the computer.

Peer-to-peer communication can be performed via short-range wireless communication 1105 by placing the digital camera 1101 and the cellular phone 1102 close to each other. The short-range wireless communication 1105 includes non-contact integrated chip (IC) card wireless communication and NFC using electromagnetic induction, and communication using induction electric field. If the distance between the apparatuses is within several centimeters in the short-range wireless communication 1105, communication can be performed between the apparatuses.

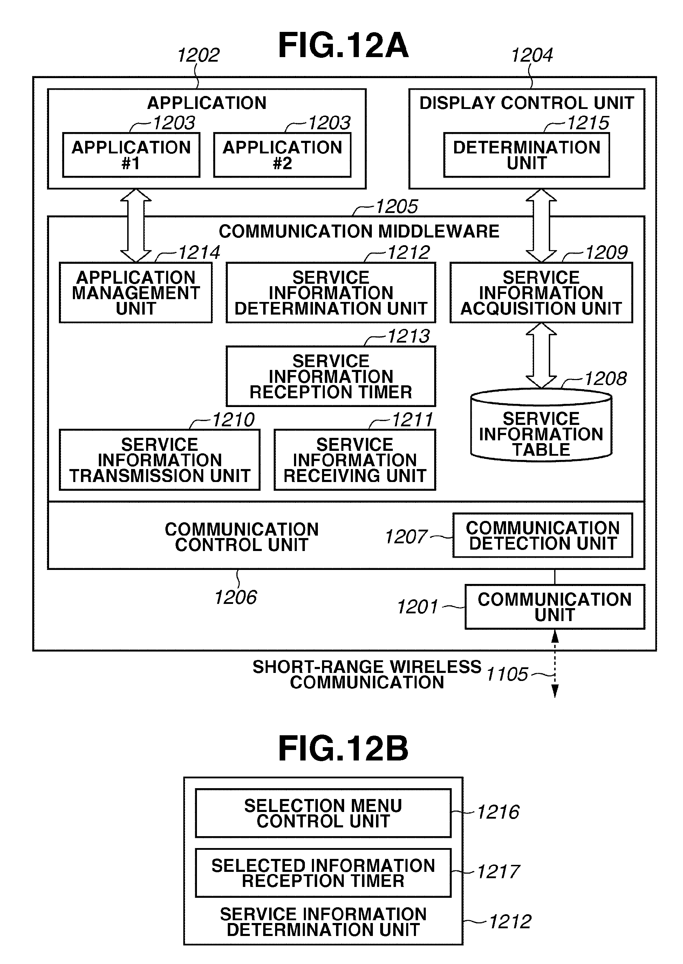

Figs. 12A and 12B are block diagrams illustrating the digital camera 1101 and the cellular phone 1102 . The components illustrated in Figs. 12A and 12B are realized by the computers (CPUs) in the digital camera 1101, the cellular phone 1102, and a digital camera 1601 to be described below, which execute the programs. Fig. 12B will be described in a fourth exemplary embodiment. Referring to Fig. 12A, a communication unit 1201 performs the short-range wireless communication 1105 illustrated in Fig. 11. An application 1202 is included in the apparatus, and application software 1203 provides services such as image printing and moving image reproduction. A display control unit 1204 controls the display states of the display units 1103 and 1104. The display control unit 1204 includes a determination unit 1215 that determines the display state of the display unit 1103. The display state of the display unit 1103 includes states for browsing and selecting directories, files, and services. The display control unit 1204 also stores detailed information about the directories, the files, and the services, such as metadata including a file name and an identifier.

A communication middleware unit 1205 provides a control function of the communication unit 1201 and a selecting function of the service to be performed. A communication control unit 1206 controls the short-range wireless communication. A communication detection unit 1207 controls and detects connection and disconnection of the short-range wireless communication. The communication detection unit 1207 detects connection when another device that can communicate using the short-range wireless communication 1105 is placed close to a short-range wireless communication area. On the other hand, the communication detection unit 1207 detects disconnection when another device that can communicate using the short-range wireless communication 1105 is placed away from the short-range wireless communication area.

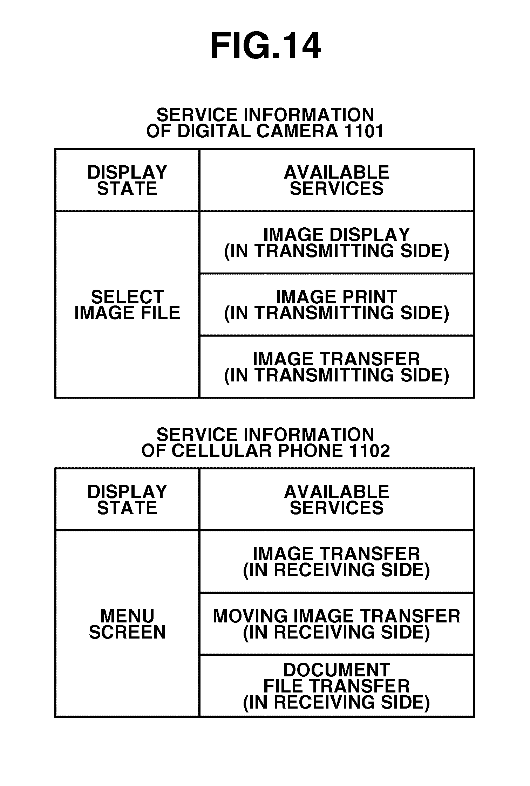

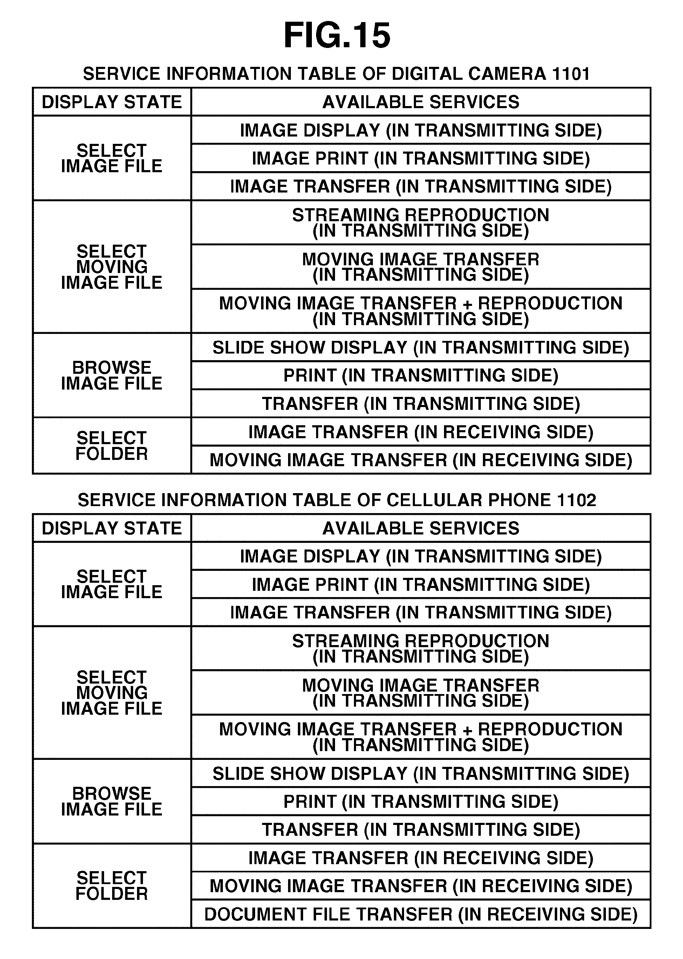

A service information table 1208 stores the service information defined for each display state in the display units 1103 and 1104. The service information table 1208 is stored in storing units in the digital camera 1101 and the cellular phone 1102. The service information indicates types of services that can be performed in a display state, for example, in a form of a list of services, including "image print" and "image transfer", as illustrated in Fig. 14. The service information table 1208 stores the service information for each display state as illustrated in Fig. 15 and is described in a format such as an extensible markup language (XML).

A service information acquisition unit 1209 acquires from the service information table 1208 the service information corresponding to the display state notified from the display control unit 1204. A service information transmission unit 1210 transmits to the connected peer apparatus via the short-range wireless communication 1105, the service information acquired by the service information acquisition unit 1209. A service information receiving unit 1211 receives the service information from the peer apparatus. A service information determination unit 1212 compares the service information of both devices communicating with each other and determines the service to be performed. A service information reception timer 1213 measures the time necessary for the service information receiving unit 1211 to receive the service information of the peer apparatus. If the service information is not received even when a predetermined time has elapsed, the process is ended without determining the service by the service information determination unit 1212. An application management unit 1214 executes the application software that provides the service determined by the service information determination unit 1212.

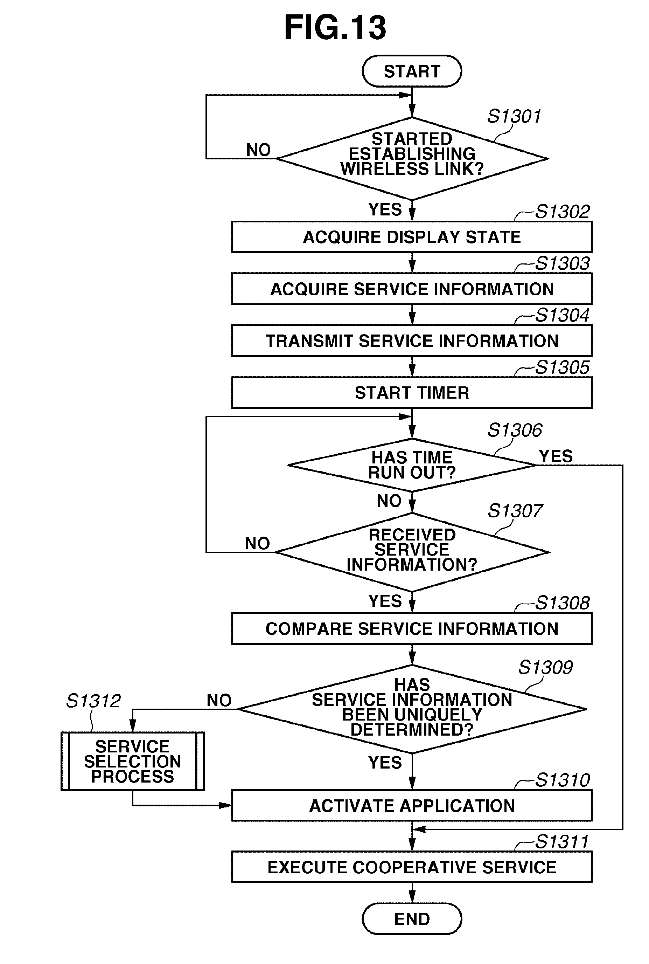

A process according to the present exemplary embodiment will be described below with reference to the flowchart illustrated in Fig. 13. The process will be described below in terms of the digital camera 1101, so that the digital camera 1101 is defined as the own apparatus and the cellular phone 1102 as the peer apparatus. However, a similar process may be performed without depending on whether the subject apparatus is the own apparatus or the peer apparatus.

The digital camera 1101 and the cellular phone 1102 are initially placed at a distance that is far enough so that the short-range wireless communication 1105 cannot be performed. If the image file stored in the digital camera 1101 is to be transferred to the cellular phone 1102, the image file to be transferred is selected by the user operating on the digital camera 1101. In general, the display unit 1103 in the digital camera 1101 displays the image file to be transferred. On the other hand, the display state of the cellular phone 1102 is a menu screen.

The user then places the digital camera 1101 close to the cellular phone 1102 in such a state. In step S1301, the communication detection unit in the digital camera 1101 which is monitoring connection of the short-range wireless communication 1105 detects whether the connection is established. If the communication detection unit detects the connection (YES in step S1301), the process proceeds to step S1302. In step S1302, the determination unit 1215 determines the display state of the display unit and notifies the service information acquisition unit 1209 of the display state. The service information acquisition unit 1209 thus acquires the current display state of the display unit 1103.

As a result, the service information acquisition unit 1209 can confirm that the display state is "select image file". In step S1303, the service information acquisition unit 1209 searches the service information table 1208 and acquires the service information corresponding to the display state. According to the present exemplary embodiment, since the display state is "select image file", the service information acquisition unit 1209 acquires as the service information, "image display (in the transmitting side)", "image print (in the transmitting side)", and "image transfer (in the transmitting side)" (refer to Figs. 14 and 15).

In step S1304, the service information transmission unit 1210 transmits to the cellular phone 1102, i.e., the peer apparatus, the service information acquired by the service information acquisition unit 1209. In step S1305, the service information reception timer 1213 is then started. In step S1306, it is determined whether the service information receiving unit 1211 has received the service information from the peer apparatus after a predetermine time has elapsed from when the service information reception timer 1213 is started. If the service information receiving unit 1211 has not received the service information (YES in step S1306), it is determined that an error has occurred in the peer apparatus, or that the peer apparatus is a legacy device which is not suitable to the process. The service selection process is then suspended and ends. If the service information receiving unit 1211 has received the service information (NO in step S1306), the process proceeds to step S1307. In step S1307, it is determined whether the service information receiving unit 1211 has received the service information from the cellular phone 1102. If the service information receiving unit 1211 has received the service information from the cellular phone 1102 (YES in step S1307), the service information reception timer 1213 is stopped.

In step S1308, the service information determination unit 1212 compares the service information of the digital camera 1101 acquired by the service information acquisition unit 1209 and the received service information of the cellular phone 1102 . In step S1309, the service information determination unit 1212 determines whether there is the service information that is performed in cooperation between the digital camera 1101 and the cellular phone 1102, based on the comparison result. According to the present exemplary embodiment, the display state of the cellular phone 1102 is the menu screen. The service information receiving unit 1211 thus receives as the service information, "image transfer (in the receiving side)", moving "image transfer (in the receiving side)", and "document file transfer (in the receiving side) . As a result, "image transfer (in the transmitting side)" and "image transfer (in the receiving side)" match as the service information to be performed in cooperation, and the image transfer service is determined as the service to be used. The process then proceeds to step S1310.

In step S1310, the application service management unit 1214 executes the application software that provides the cooperative service (i.e., the image transfer service) determined by the service information determination unit 1212. In step 1311, the application management unit 1214 performs the determined cooperative service (i.e., the image transfer service) employing the executed application software.

Since a similar process is also performed in the cellular phone 1102, i.e., the peer apparatus, the application software that provides the image transfer service is activated in the cellular phone 1102. The applications of the image transfer service corresponding to each of the digital camera 1101 and the cellular phone 1102 are thus activated in each of the apparatuses, and the image file selected in the digital camera 1101 is transferred to the cellular phone 1102.

Further, if there is no matching service information as a result of the comparison performed in step S1308, or if there are a plurality of matching service information and the service information cannot be uniquely determined (NO in step S1309), the process proceeds to step S1302. In step S1302, the service information determination unit 1212 performs the service selection process.

In step S1302, the process performed in step S503 illustrated in Fig. 5 according to the first exemplary embodiment is started. The processes of step S504 to step S508 and step S513 are then performed similarly as in the flowchart illustrated in Fig. 5. After the process is performed in step S508, the process returns to step S1310 illustrated in Fig. 13, and the application corresponding to the selected application is activated. In such a case, the user is caused to select the service to be performed from the matching plurality of services.

As described above, if the operator selects the image file on the display unit 1103 in the digital camera 1101 and displays the menu screen in the cellular phone 1102, the image file can be transferred by touching the cellular phone 1102 with the digital camera 1101 (i.e., placing the cellular phone 1102 close to the digital camera 1101). Further, the process can be performed without malfunction, even when there is an error in the peer apparatus or when the peer apparatus is a legacy device. Furthermore, if the service to be performed cannot be uniquely determined, the service to be performed can be easily selected by the user performing the touching and the detaching operations.

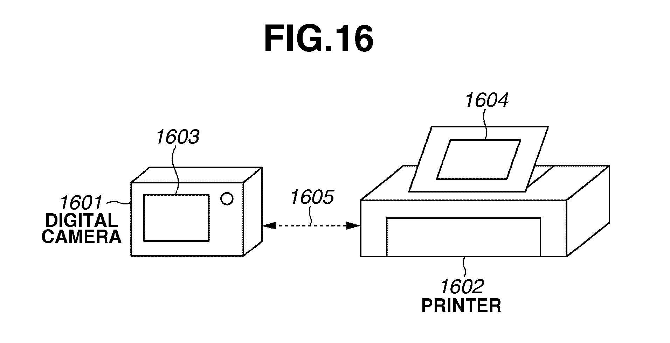

Fig. 16 illustrates a system configuration according to a fourth exemplary embodiment. Referring to Fig. 16, a printer 1602 is the communication peer apparatus of a digital camera 1601. The digital camera 1601 includes a display unit 1603, and the printer 1602 includes a display unit 1604. An operator of the digital camera 1601 and the printer 1602 can change or set the display states, such as "browse image file" or "select image file", by viewing the display units 1603 and 1604. The digital camera 1601 and the printer 1602 include a computer (i.e., a CPU) for controlling the apparatuses and a memory for storing the programs to be executed by the computer. The peer-to-peer communication can be performed via short-range wireless communication 1605 by placing the digital camera 1601 and the printer 1602 close to each other.

Figs. 12A and 12B are block diagrams illustrating the configurations of the digital camera 1601 and the printer 1602. According to the present exemplary embodiment, Fig. 12B illustrates the configuration of the service information determination unit 1212. The difference from the third exemplary embodiment will be described below.

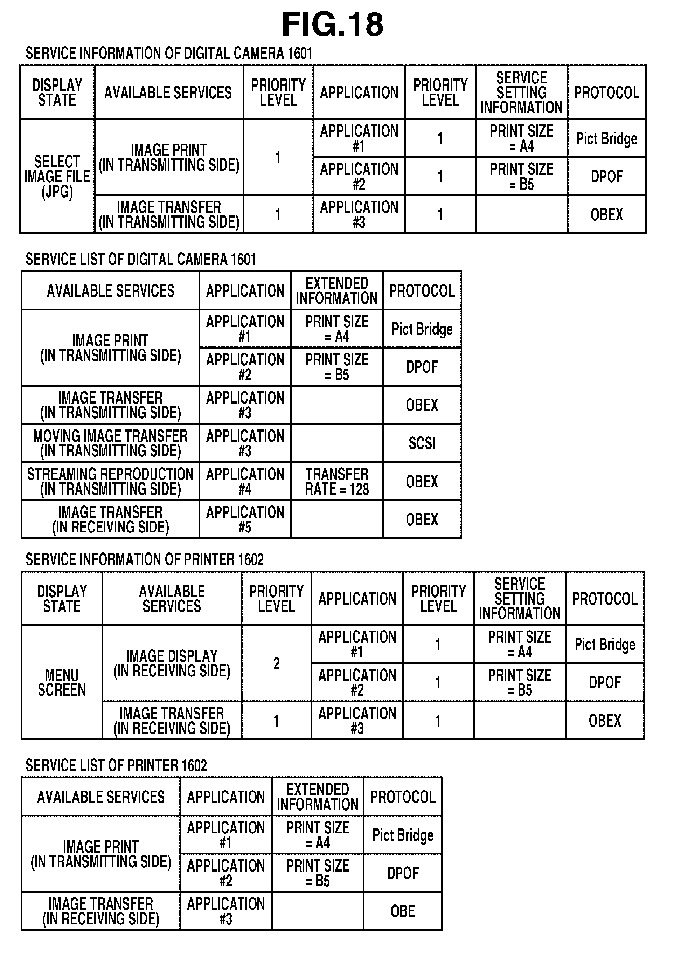

The service information according to the fourth exemplary embodiment describes the types of services that can be performed in the display states. Further, the service information according to the fourth exemplary embodiment describes the applications, service setting information, communication protocols (hereinafter referred to as protocols) that are necessary for performing the service (refer to Fig. 18), and priority levels thereof. However, it is not necessary to assign the priority level, and a preset default value is automatically assigned to the item which is not assigned the priority level.

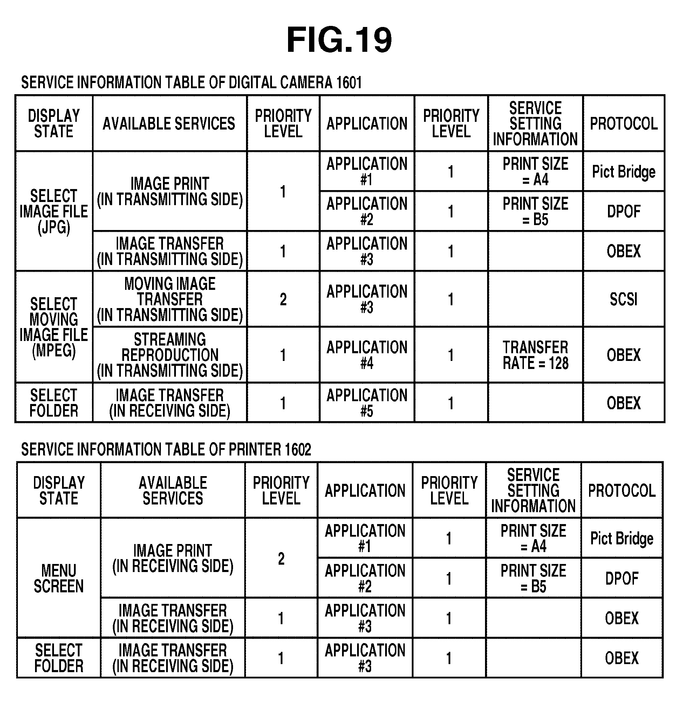

Referring to Fig. 12A, the service information table 1208 stores the service information for each display state as illustrated in Fig. 19. The service information table 1208 stores all of the types of services that can be performed in the apparatus, associated with the application, the service setting information, and the protocol, that are necessary for performing each type of service. It is not necessary to manage all of the above-described information in the service information table 1208, as long as one or more of the information are managed.

The service information acquisition unit 1209 acquires the display state from the display control unit 1204, and acquires from the service information table the service information and the service list corresponding to the display state. The service information transmission unit 1210 transmits the service information and the service list to the peer apparatus. The service information receiving unit 1211 receives the service information and the service list from the peer apparatus.

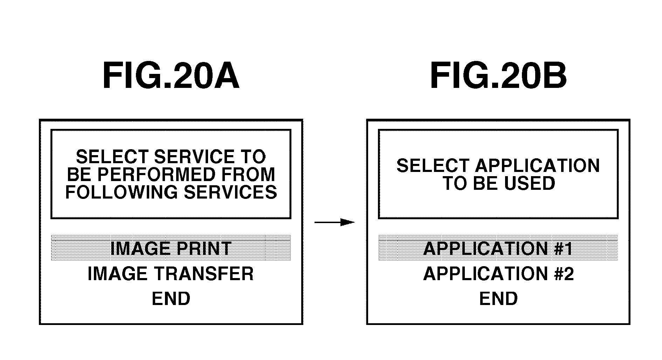

A service information determination unit 1212 includes a selection menu control unit 1216 and a selected information reception timer 1217. The selection menu control unit 1216 causes the operator to select, when the service to be used cannot be automatically determined, the item of the service information. More specifically, referring to Figs. 20A and 20B, the display control unit 1204 performs control to display as a list on the display units 1603 and 1604, the items that have not been determined. The operator is then caused to select and determine the item, so that the service information is determined. Further, the service information may be determined by receiving the determined service information from the peer apparatus (i.e., the printer 1602).

The selected information reception timer 1217 measures the time for receiving the service information from the peer apparatus 1602. The selected information reception timer 1217 is started when the selection menu control unit 1216 displays the selection menu on the display units 1603 and 1604, and is stopped when the service information is determined.

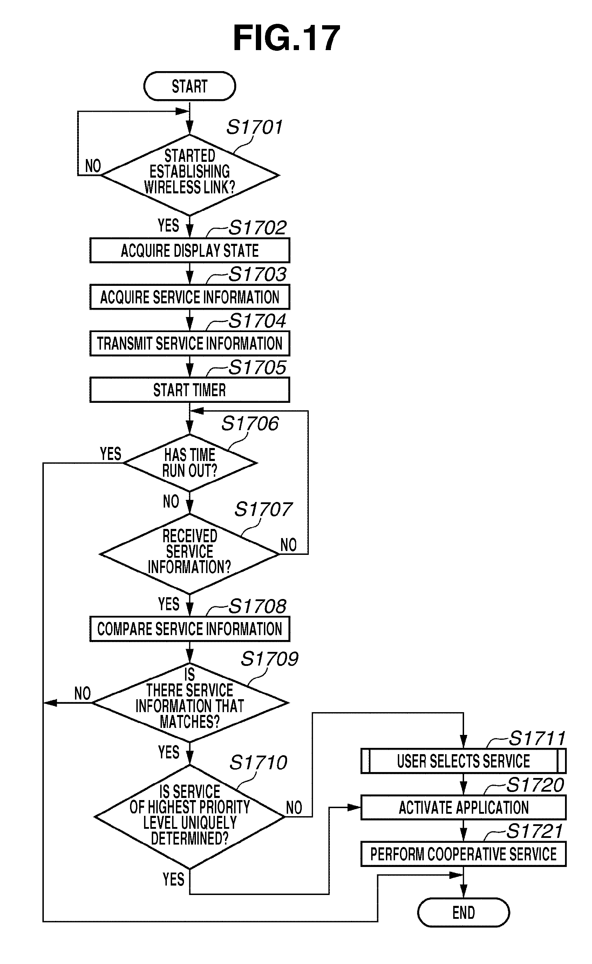

The process according to the present exemplary embodiment will be described below with reference to a flowchart illustrated in Fig. 17. According to the fourth exemplary embodiment, the process will be described below in terms of the digital camera 1601, so that the digital camera 1601 is defined as the own apparatus and the printer 1602 as the peer apparatus. However, a similar process may be performed without depending on whether the subject apparatus is the own apparatus or the peer apparatus.

The digital camera 1601 and the cellular phone 1602 are initially placed at a distance that is long enough so that the short-range wireless communication 1605 cannot be performed. If the image file stored in the digital camera 1601 is to be printed by the printer 1602, the image file to be printed is selected by the operator operating on the digital camera 1601. In general, the display unit 1603 in the digital camera 1601 displays the image file to be printed. On the other hand, the display state of the printer 1602 is the menu screen.

The digital camera 1601 is then placed close to the printer 1602 in such a state. In step S1701, the communication detection unit in the digital camera 1601 which is monitoring connection of the short-range wireless communication 1105 detects whether the connection is established. If the communication detection unit detects the connection (YES in step S1701), the process proceeds to step S1702. In step S1702, the determination unit 1215 determines the display state of the display unit and notifies the service information acquisition unit 1209 of the display state. The service information acquisition unit 1209 thus acquires the current display state of the display unit 1603.

As a result, the service information acquisition unit 1209 can confirm that the display state is "select image file". In step S1703, the service information acquisition unit 1209 searches the service information table 1208 and acquires the service information corresponding to the display state. According to the present exemplary embodiment, since the display state is "select image file", the service information acquisition unit 1209 acquires as the service information, "image print (in the transmitting side)" and "image transfer (in the transmitting side)" (refer to Figs. 18 and 19).

In step S1704, the service information transmission unit 1210 transmits to the printer 1602, i.e., the peer apparatus, the service information acquired by the service information acquisition unit 1209. In step S1705, the service information reception timer 1213 is then started. In step S1706, it is determined whether the service information from the peer apparatus has been received after a predetermine time has elapsed from when the service information reception timer 1213 is started. If the service information has not been received after a predetermine time has elapsed (YES in step S1706), it is determined that an error has occurred in the peer apparatus, or that the peer apparatus is a legacy device that is not suitable to the process. The service selection process is then suspended and ends. If the service information receiving unit 1211 has received the service information (NO in step S1706) , the process proceeds to step S1707. In step S1707, it is determined whether the service information receiving unit 1211 has received the service information from the peer apparatus. If the service information receiving unit 1211 has received the service information from the peer apparatus (YES in step S1707), the service information reception timer 1213 is stopped. The process then proceeds to step S1708.

In step S1708, the service information determination unit 1212 compares the service information of the digital camera 1601 acquired by the service information acquisition unit 1209 and the received service information of the printer 1602. In step S1709, the service information determination unit 1212 determines whether there is the service information that is to be cooperatively performed, based on the comparison result. According to the present exemplary embodiment, the display state of the printer 1602 is the menu screen. The service information receiving unit 1211 thus receives "image print (in the receiving side)" and "image transfer (in the receiving side)" as the service information. As a result, "image print (in the transmitting side)" and "image print (in the receiving side)", and "image transfer (in the transmitting side)" and "image transfer (in the receiving side)" match as the service information that is to be cooperatively executed.

If there are services that match in all of the items (YES in step S1709), the process proceeds to step S1710. In step S1710, sums of the priority levels of all items related to such services in the own apparatus and the peer apparatus are compared, and the service whose sum of the priority levels is greatest is determined as the service to be performed. In addition, if there is only one service that matches in all of the items (YES in step S1710), the service is determined as the service to be performed, regardless of the priority level. The process then proceeds to step S1720. In step S1720, the application management unit 1214 activates the application software that provides the cooperative service determined by the service information determination unit 1212. In step S1721, the application management unit 1214 performs the determined cooperative service employing the activated application software. On the other hand, if there is no service that matches (NO in step S1709), the processing is ended without performing the service. In that case, an error may be displayed for the user.

According to the fourth exemplary embodiment, since the priority level (i.e., the sum of the priority levels) of the image print service is higher than that of the image transfer service, the image print service is determined to be the service to be performed. Further, since the priority levels of application #1 and application #2 illustrated in Fig. 18, i.e., the applications that are necessary for performing the service, are the same, the service information cannot be determined. If the service information cannot be determined (NO in step S1710) , the process proceeds to step S1711. In step S1711, the selection menu control unit 1216 causes the user to select the application to be activated similarly as in the first and second exemplary embodiments. In such a case, the user is caused to select either the application #1 or the application #2, i.e., the services that match between the digital camera 1601 and the printer 1602, as the application to be activated. As a result, the application to be activated can be easily selected even when the application to be activated cannot be uniquely determined based on the priority level.

According to the present exemplary embodiment, the user is caused to select the application. However, the user may similarly be caused to select a service. In such a case, the user is caused to select the service from the services that can be commonly performed by the digital camera 1601 and the printer 1602. The service to be performed can thus be easily selected even when the service to be performed cannot be uniquely determined based on the priority level.

In step S1720, the application management unit 1214 activates the application software that provides the selected cooperative service. In step S1721, the application management unit 1214 performs the determined cooperative service employing the executed application software. According to the present exemplary embodiment, the service in which the printer 1602 prints the image selected in the digital camera 1601 is performed. On the other hand, if the service information is not selected in the own apparatus or the peer apparatus, and the operator selects to end the process in step S1719 (YES in step S1719), the process ends.

The service information is selected as described below with reference to Figs. 20A and 20B. When the message illustrated in Fig. 20A is displayed and the operator selects "image print", choices of applications illustrated in Fig. 20B are displayed. If the operator then selects the application, the service information can be determined. As a result, if the service cannot be determined, the user can be caused to select the desired service.

Further, since the image print service can be determined by comparison between the priority levels, the choices of the items that have not been determined may be displayed first. According to the present exemplary embodiment, the choices of applications for performing image print as illustrated in Fig. 20B may be displayed. The user operation becomes simplified by causing the user to select the items that cannot be automatically determined.

If there is no matching service information in the service information exchanged between the digital camera 1601 and the printer 1602 (NO in step 51709), the process proceeds to step S1711. In step S1711, a comparison is performed between the service lists (of all services) of the digital camera 1601 and the printer 1602. In step S1712, if it is determined that there is the service information that match among the service information which is to be cooperatively performed (YES in step S1712), the process proceeds to step S1713. In step S1713, the choices for selecting the service information are displayed and the operator is caused to select the service. According to the present exemplary embodiment, there is a plurality of methods for selecting the service. For example, a list of matching service information is displayed, and the operator is caused to select the service to be used. Further, the operator may be caused to select the item of the service information that cannot be determined. The processes performed after step S1713 are the same as described above, and description will be omitted.

As described above, the operator can print the image file by only selecting the image file on the display unit 1603 in the digital camera 1601 and touching the printer 1602 with the digital camera 1601. It is thus not necessary for the operator to set all of the service setting information to start the service. Further, by using the priority levels, the process can be flexibly performed even when there is a plurality of services, applications, service setting information, and protocols. Furthermore, if the service to be used cannot be automatically determined, the operator can be caused to select the service to be used from available services. Moreover, if the service can be narrowed down using the priority levels of the service information, the operator can be caused to select only the items in the service information that cannot be automatically determined. As a result, the operation to be performed by the operator can be simplified, and the operator can use the service by easy operation.

According to a fifth exemplary embodiment, the service information is selected from the display state of the own apparatus, and the cooperative service with the peer apparatus is then started. If the service can be normally started, the service is continued. If the service with the peer apparatus cannot be started, the service is switched to another service, and the cooperative service with the peer service is then started.

The system configuration according to the present exemplary embodiment is similar to that illustrated in Fig. 16. Further, it is not necessary for the service information transmission unit 1210, the service information receiving unit 1211, and the service information reception timer 1213 illustrated in Fig. 12 to be included in the configuration of the digital camera 1601. Furthermore, the printer 1602 only provides the image print service using the application #1.

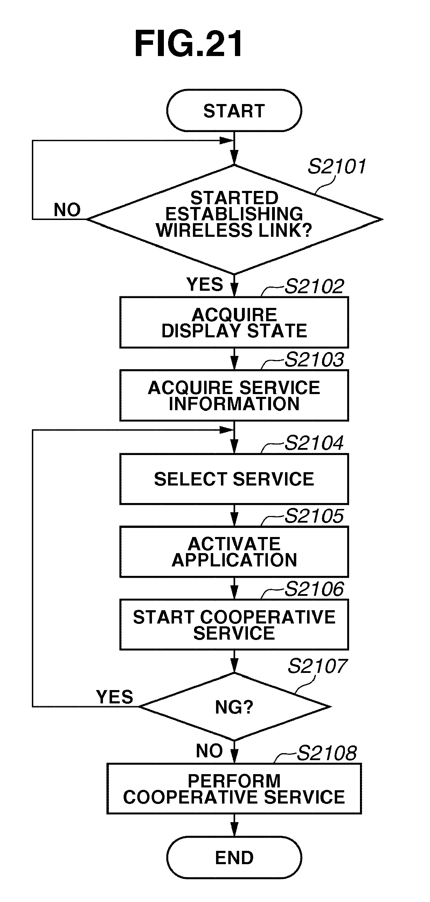

The process according to the present exemplary embodiment will be described below with reference to the flowchart illustrated in Fig. 21. The process will be described below in terms of the digital camera 1601, so that the digital camera 1601 is defined as the own apparatus.

The digital camera 1601 and the printer 1602 are initially placed at a distance that is long enough so that the short-range wireless communication 1605 cannot be performed. If the user desires the image file stored in the digital camera 1601 to be printed by the printer 1602, the image file to be printed is selected by the user operating on the digital camera 1601. In general, the display unit 1603 in the digital camera 1601 displays the image file to be printed.

The digital camera 1601 is then placed close to the printer 1602 in such a state. In step S2101, the communication detection unit in the digital camera 1601 which is monitoring connection of the short-range wireless communication 1105 detects whether the connection is established. If the communication detection unit detects the connection (YES in step S2101), the process proceeds to step S2102. In step S2102, the determination unit 1215 determines the display state of the display unit and notifies the service information acquisition unit 1209 of the display state. The service information acquisition unit 1209 thus acquires the current display state of the display unit 1603.

As a result, the service information acquisition unit 1209 can confirm that the display state is "select image file". In step S2103, the service information acquisition unit 1209 searches the service information table 1208 and acquires the service information corresponding to the display state. According to the present exemplary embodiment, since the display state is "select image file", the service information acquisition unit 1209 acquires as the service information, "image print (in the transmitting side)" and "image transfer (in the transmitting side)" (refer to Figs. 18 and 19).

In step S2104, the service information determination unit 1212 confirms the priority level of the service information acquired by the service information acquisition unit 1209 and selects the service information of the highest priority level. In step S2105, upon selecting the service information, the application management unit 1214 executes the application software providing the service corresponding to the selected service information. In step S2106, the application management unit 1214 notifies the peer apparatus of service start using the executed application software. In step S2107, if the peer apparatus does not support the service, an error is generated, or there is no response (YES in step S2107). The service thus ends due to the error. On the other hand, if the peer apparatus supports the service, a normal response is returned with respect to starting the service (NO in step S2107), and the process proceeds to step S2108. In step S2108, the service is thus continuously performed. If the service ends due to the error, the service information determination unit 1212 reselects the service of the next priority level and performs the processes starting from step S2105. If none of the services of the service information acquired in step S2103 can be performed, the process ends.

According to the present exemplary embodiment, since the display state of the digital camera 1601 is "select image file", the service information acquisition unit 1209 acquires as the service information, "image print (in the transmitting side)" and "image transfer (in the transmitting side)". The selection and starting of the service information are then repeated until "image print (in the transmitting side)" using application #1 with which the printer 1602 complies is selected. Further, when "image print (in the transmitting side)" using the application #1 is selected, the image print service in cooperation with the printer 1602 is performed.

As described above, according to the present exemplary embodiment, the service can be performed using the automatic service selection based on the display state even when the peer apparatus does not support the automatic service selection.

The present invention may also be realized by supplying software (i.e., a program code) that can implement the functions of the above-described exemplary embodiments, to a system or an apparatus using a computer-readable storage medium, and the system or the apparatus reading out and executing the program code stored in the storage medium.

An embodiment of the invention can provide a communication apparatus capable of providing a plurality of services in cooperation with a communication peer, the apparatus comprising: display means configured to select and display a predetermined service from the plurality of services; detection means configured to detect whether there is connection with or disconnection from a communication peer; and control means configured to perform control, if the detection means detects a connection with the communication peer after disconnecting from the communication peer, to switch a service to be selected and displayed by the display means.

Another embodiment of the invention can provide a communication apparatus capable of providing, in cooperation with a communication peer, a plurality of services that is provided in cooperation with the communication peer, based on a service available to the communication apparatus and a service available to the communication peer, the communication apparatus comprising: display means configured to select a predetermined service from the plurality of services and cause the selected service to be displayed in the communication peer, detection means configured to detect connection and disconnection with the communication peer; and control means configured to perform control, if the detection means detects a connection with the communication peer after disconnecting from the communication peer, to switch a service that the display means selects and causes the peer communication to display.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A communication apparatus (101) configured to provide a plurality of services in cooperation with a communication peer apparatus (102), the communication apparatus (101) comprising:
display means (203) configured to select and display a predetermined service from the plurality of services;
detection means (1207) configured to detect whether there is connection with or disconnection from a communication peer apparatus (102); and
control means (204) configured to perform control, if the detection unit detects a reconnection with the communication peer apparatus (102) after a disconnection from the communication peer apparatus (102), to switch a service to be selected and displayed by the display means (203).

2. The communication apparatus according to claim 1, wherein the control means (204) is configured to determine whether a period of time in which a connection with the communication peer apparatus (102) is maintained is longer than a predetermined period of time (S507) ; and
wherein the control means (204) is configured to cause the communication apparatus (101) to provide, if the determination unit determines that a period of time in which a connection with the communication peer apparatus (102) is maintained is longer than the predetermined period of time, a service that is selected and displayed by the display means (203) .

3. The communication apparatus according to claim 1, further comprising:
input means (206) configured to provide an interface for the user to input instructions to the communication unit (101) ; and
wherein the control means (204) is configured to cause the communication apparatus (101) to provide, if an instruction for providing a service that is selected and displayed by the display means (203) is input via the input means (206), the service selected and displayed by the display means (203).

4. The communication apparatus according to claim 2 or 3, wherein each of the plurality of services is provided by activating a different application, and
wherein the control means (204) is configured to cause the communication apparatus to activate (S509) an application for providing a service selected and displayed by the display means (203).

5. The communication apparatus according to claim 4, further comprising acquisition means (1209) configured to acquire information about a plurality of applications included in the communication peer apparatus (102) from the communication peer apparatus (102),
wherein the display means (203) is configured to select a predetermined application from the plurality of applications acquired by the acquisition means (1209) and to display a service corresponding to the selected application.

6. The communication apparatus according to claim 4 or 5, wherein the control means (204) is configured to transmit to the communication peer apparatus, information for activating an application in the communication peer apparatus (102) for causing the communication peer apparatus to provide a service corresponding to a service selected and displayed by the display means (203).

7. The communication apparatus according to any preceding claim, further comprising storing means configured to store a service switched by the control means (204),
wherein the control means (204) is configured to cause the display means (203) to select and display a service that is different from a service stored by the storing means.

8. The communication apparatus according to claim 1, wherein the control means is configured to switch, if the detection means detects a connection with the communication peer apparatus after disconnecting from the communication peer apparatus, a service selected and displayed by the display means.

9. The communication apparatus according to any preceding claim, wherein the display means (203) is configured to select a predetermined service from the plurality of services and to cause the selected service to be displayed in the communication peer apparatus (102); and
wherein the control means (204) is configured, if the detection means (1207) detects a reconnection with the communication peer apparatus (102) after a disconnection from the communication peer apparatus, to switch a service that the display means (203) selects and to cause the peer communication apparatus (204) to display the switched service.

10. A control method for a communication apparatus (101) capable of providing a plurality of services in cooperation with a communication peer apparatus (102), the method comprising:
selecting and displaying a predetermined service from the plurality of services;
detecting whether there is connection with or disconnection from a communication peer apparatus (102); and
performing control, if a reconnection with the communication peer apparatus (102) is detected after disconnecting from the communication peer apparatus, to switch a service to be selected and displayed by the communication apparatus (101).

11. A program for causing a computer to operate as a communication apparatus according to any one of claims 1 to 9.

12. A program which, when executed by a computer, causes the computer to carry out the method of claim 10.

13. A storage medium storing the computer program according to claim 11 or claim 12.
